(19) Europäisches Patentamt
European Patent Office
Office européen des brevets

(11) **EP 2 693 808 B1**

(12) **EUROPEAN PATENT SPECIFICATION**

(45) Date of publication and mention
of the grant of the patent:
**11.01.2017 Bulletin 2017/02**

(21) Application number: **12765164.4**

(22) Date of filing: **22.03.2012**

(51) Int Cl.:
***H04W 48/04*** *(2009.01)*   *H04W 72/08* *(2009.01)*
*H04W 84/04* *(2009.01)*

(86) International application number:
**PCT/CN2012/072794**

(87) International publication number:
**WO 2012/130079 (04.10.2012 Gazette 2012/40)**

(54) **CELL ACCESS METHOD AND NODE DEVICE**

TELEFONZUGANGSVERFAHREN UND KNOTENVORRICHTUNG DAFÜR

PROCÉDÉ D'ACCÈS À UNE CELLULE ET DISPOSITIF FORMANT NOEUD

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **01.04.2011 CN 201110081791**

(43) Date of publication of application:
**05.02.2014 Bulletin 2014/06**

(73) Proprietor: **Huawei Technologies Co., Ltd.
Longgang District
Shenzhen, Guangdong 518129 (CN)**

(72) Inventors:
• **XIAO, Dengkun**
  **Guangdong 518129 (CN)**
• **LI, Qiming**
  **Guangdong 518129 (CN)**

(74) Representative: **Körber, Martin Hans et al
Mitscherlich PartmbB
Patent- und Rechtsanwälte
Sonnenstrasse 33
80331 München (DE)**

(56) References cited:
**EP-A2- 1 339 251    WO-A2-02/065789
WO-A2-2008/144520    CN-A- 101 562 858
CN-A- 101 784 056    US-A1- 2002 164 997
US-A1- 2007 010 270**

**Description**

**TECHNICAL FIELD**

The present invention relates to the field of communication technologies, and in particular, to a cell access method and a node device.

**BACKGROUND**

In a communication system such as LTE-A (Long-term Evolution Advance, long-term evolution advanced), a low-power node can be used. A low-power node and a macro base station together form a heterogeneous network. The low-power node is mainly used for coverage enhancement, capacity increase, improvement of communication quality of an edge user equipment, group mobility, temporary network deployment, and cost reduction. Compared with a macro base station, a low-power node has the advantages of low cost and flexible deployment, and is capable of improving system capacity and edge user equipment throughput. However, introduction of low-power nodes brings about a lot of low-power cells in a macro cell.

In a conventional cell access solution, after receiving an access request from a user equipment, a serving node of a local cell determines whether the cell has an idle physical resource, and if so, allows the access of the user equipment and allocates the corresponding physical resource, or if not, denies the access. In this way, if the user equipment is located at the edge of the local cell, and the physical resource allocated to the user equipment is in the same frequency band as a physical resource used by a user equipment in a neighboring cell close to the user equipment at the edge of the local cell, the access of the user equipment may cause great interference to the neighboring cell.

For example, US 2002/0164997 A1 refers to a method of controlling wireless communication access comprising defining an access zone with at least on first computing device having a first position and selectively permitting wireless access for a second computing device to the first computing device based on a second position of the second computing device relative to the access zone.

Further, WO 2008/144520 refers to a method for a location-based wireless network. In particular, the method comprises determining a current location of at least one mobile unit, permitting network access to a wireless network to the mobile unit if a network access policy of the mobile unit is configured to permit network access for the current location and denying network access to the wireless network to the mobile unit if the network access policy of the mobile unit is configured to restrict network access for the current location.

Further, WO 02/065789 A2 refers to a method for determining whether to grant access of a user equipment to a radio access network. In particular, WO 02/065789 refers to a method for determining whether to grant access of a user equipment (UE) to a radio access network in a present position of the user equipment (UE) within a communications system, the communications system comprising a control node (N1, N2) handling services for the user equipment (UE) and an access node (AN1, AN2) controlling the access network, the method comprising the steps of receiving a request for service processing for the user equipment (UE) in the control node (N1, N2) with an identification of the user equipment (UE), determining a subscriber group information for the user equipment (UE) according to the identification of the user equipment, sending the subscriber group information to the access node (AN1, AN2), determining an area access information according to the present location of the user equipment (UE) in the access node (AN1, AN2), and performing the access granting of the user equipment (UE) to the radio access network according to a logical combination of the subscriber group information and the area access information.

Further, US 2007/0010270 A1 refers to an apparatus and method of radio access management for a radio communication system. The apparatus for a radio communication system comprises a means for receiving an access message transmitted from a subscriber unit to a base station, a means for receiving a measured signal to interference ratio of a signal of the base station data from the subscriber unit, a means for determining an interference characteristic associated with the subscriber unit in response to the measured signal to interference ratio and a known transmitted signal to interference ratio of the base station and a means for determining a resource requirement for achieving a desired signal to interference ratio in response to the interference characteristic.

Further, EP 1 339 251 A2 refers to a base station and communication method. The base station comprises an interference quantity measurement unit configured to measure an interference quantity toward a frequency band used in a communication system in which the base station is provided, an allowable interference quantity calculation unit configured to calculate an allowable interference quantity toward the frequency band, which is allowed to maintain a determined number of terminal equipments connecting lines with the base station, based on the measured interference quantity and the determined number of the terminal equipments, a reception unit configured to receive a request of connecting the line transmitted by the terminal equipment and an acceptance control unit configured to control an acceptance of the request for connecting the line by comparing the measured interference quantity with the allowable interference quantity.

## SUMMARY

To solve the foregoing problems in the prior art, embodiments of the present invention provide a cell access method and a node device to reduce interference between neighboring cells.

For the above purpose, the embodiments of the present invention provide the following technical solutions:

According to a first aspect of the present invention, a cell access method is provided, including:

receiving by a cell access node device an access request sent by a user equipment, and determining by the cell access node device a location of the user equipment and existence of an idle physical resource; and determining, according to the location of the user equipment, to allow access of the user equipment, and allocating the idle physical resource to the user equipment, wherein the determining, according to the location of the user equipment, to allow access of the user equipment, and allocating the physical resource to the user equipment comprise:

determining, according to the location of the user equipment, that the user equipment is located in a central area of a local cell, allowing access of the user equipment, and allocating the idle physical resource to the user equipment; or determining, according to the location of the user equipment, that the user equipment is not located in a central area of a local cell, determining, according to a current use status of the idle physical resource, to allow access of the user equipment, and allocating the physical resource to the user equipment, wherein the determining, according to the current use status of the idle physical resource, to allow access of the user equipment, and allocating the physical resource to the user equipment comprise:

determining that the idle physical resource is not used by an edge user equipment in a neighboring cell, allowing access of the user equipment, and allocating the idle physical resource to the user equipment; or determining that the idle physical resource is used by an edge user equipment in a neighboring cell, wherein the idle physical resource is not identified by load indicator information of the neighboring cell, determining that an increment of downlink data throughput of the local cell after the user equipment uses the idle resource for access is greater than a decrement of downlink data throughput of the neighboring cell, allowing access of the user equipment, and allocating the idle physical resource to the user equipment.

According to a second aspect of the present invention, a cell access node device is provided, including:

a receiving and determining unit, configured to receive an access request sent by a user equipment, and determine a location of the user equipment and existence of an idle physical resource; and a determining and resource allocating unit, configured to determine, according to the existence of the idle physical resource and the location of the user equipment determined by the receiving and resource checking unit, to allow access of the user equipment, and allocate the idle physical resource to the user equipment, wherein the determining and resource allocating unit comprises a location checking unit, and further comprises a first controlling unit and/or a second controlling unit, wherein:

the location checking unit is configured to determine, according to the location of the user equipment determined by the receiving and determining unit, that the user equipment is located in a central area of a local cell; and the first controlling unit is configured to allow, according to that the location checking unit determines that the user equipment is located in the central area of the local cell, access of the user equipment, and allocate the idle physical resource to the user equipment; and/or the location checking unit is configured to determine, according to the location of the user equipment determined by the receiving and determining unit, that the user equipment is not located in the central area of the local cell; and the second controlling unit is configured to determine, according to that the location checking unit determines that the user equipment is located in the central area of the local cell, and a current use status of the idle physical resource, to allow access of the user equipment, and allocate the idle physical resource to the user equipment, wherein the second controlling unit comprises:

a status checking unit, configured to determine that the idle physical resource is not used by an edge user equipment in a neighboring cell, allow access of the user equipment, and allocate the idle physical resource to the user equipment; or

the status checking unit, configured to determine that the idle physical resource is used by an edge user equipment in a neighboring cell; and

an identifier checking unit, configured to check, according to that the status checking unit determines that the idle physical resource is used by the edge user equipment in the neighboring cell, that the idle physical resource is identified by load indicator information of the neighboring cell, determine that an increment of downlink data throughput of the local cell after the user equipment uses the idle resource for access is greater than a decrement of downlink data throughput of the neighboring cell, allow access of the user equipment, and allocate the idle physical resource to the user equipment.

With the cell access method and node device provided in embodiments of the present invention, during access of a user equipment, whether to allow access of the user equipment is determined according to the idle physical resource of a local cell and the location of the user equipment in the local cell. This reduces inter-cell interference caused by blind access of the user equipment at the edge of the cell, thereby avoiding frequent triggering of ICIC (Inter Cell Interference Coordination, inter-cell interference coordination) and improving system performance, and in particular, the average throughput of a user equipment at the edge of the cell.

## BRIEF DESCRIPTION OF DRAWINGS

To illustrate the technical solutions in the embodiments of the present invention or in the prior art more clearly, the following briefly introduces the accompanying drawings required for describing the embodiments or the prior art. Apparently, the accompanying drawings in the following descriptions show merely some embodiments of the present application, and persons of ordinary skill in the art may still derive other drawings from these accompanying drawings.

FIG. 1 is a schematic diagram of downlink interference on an existing heterogeneous network;

FIG. 2 is a flowchart of a cell access method according to an embodiment of the present invention;

FIG. 3 is a flowchart of controlling access of a user equipment based on the location of the user equipment according to an embodiment of the present invention;

FIG. 4 is a schematic diagram of division of overlapped edge areas of the coverage between a macro base station and a low-power node according to an embodiment of the present invention;

FIG. 5 is a flowchart of controlling access of a user equipment based on the current use status of an idle physical resource according to an embodiment of the present invention;

FIG. 6 is a schematic structural diagram of a cell access node device according to an embodiment of the present invention;

FIG. 7 is a schematic structural diagram of a specific implementation of a cell access node device according to an embodiment of the present invention;

FIG. 8 is a schematic structural diagram of another specific implementation of a cell access node device according to an embodiment of the present invention;

FIG. 9 is a schematic structural diagram of another specific implementation of a cell access node device according to an embodiment of the present invention; and

FIG. 10 is another schematic structural diagram of a cell access node device according to an embodiment of the present invention.

## DESCRIPTION OF EMBODIMENTS

In order to help persons skilled in the art understand the solutions of the embodiments of the present invention more clearly, the embodiments of the present invention are further described in detail below with reference to the accompanying drawings and implementations.

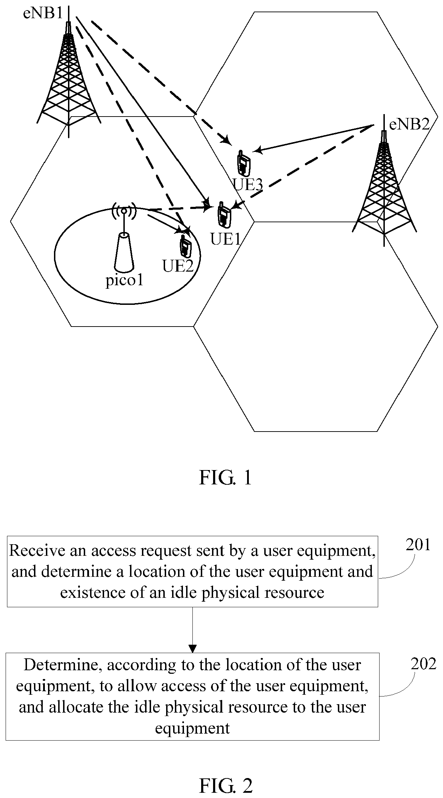

On a heterogeneous network formed by low-power nodes and macro base stations, when a user at the edge of the cell accesses a serving cell, if a physical resource allocated by a serving node of the cell to the user and a physical resource used by a nearby user in a neighboring cell are in the same frequency band, access of the user may cause strong interference to the neighboring cell, and in particular, strong downlink interference to an edge user in a low-power neighboring cell. As shown in FIG. 1, when an eNB1 transmits a signal to a user equipment UE1, interference is caused to edge user equipments UE2 and UE3 in a neighboring cell, as indicated by dotted lines.

With respect to such interference in the prior art, during access of a user equipment, a cell access method and a node device provided in embodiments of the present invention consider not only the physical resource situation of a local cell but also the impact of interference on a neighboring cell caused by access of the user equipment to determine whether to allow the access and allocate the corresponding physical resource to the accessed user equipment, thereby avoiding interference between neighboring cells.

FIG. 2 is a flowchart of a cell access method according to an embodiment of the present invention. The method includes the following steps:

Step 201: Receive an access request sent by a user equipment, and determine a location of the user equipment and existence of an idle physical resource.

In one embodiment, in a heterogeneous network scenario of an LTE-A system, the user equipment may be a user equipment in a macro cell or a user equipment in a micro cell or a pico cell. The user equipment may select a cell for access according to the measurement of a reference signal delivered by the eNB.

After receiving the access request from the user equipment, the eNB checks whether the local cell has an idle physical resource and determines the location of the user equipment.

Step 202: Determine, according to the location of the user equipment, to allow access of the user equipment, and allocate the idle physical resource to the user equipment.

That is, during access of the user equipment, the eNB considers both the idle physical resource of the local cell and the location of the user equipment in the local cell to determine whether to allow access of the user equipment, thereby avoiding interference between neighboring cells.

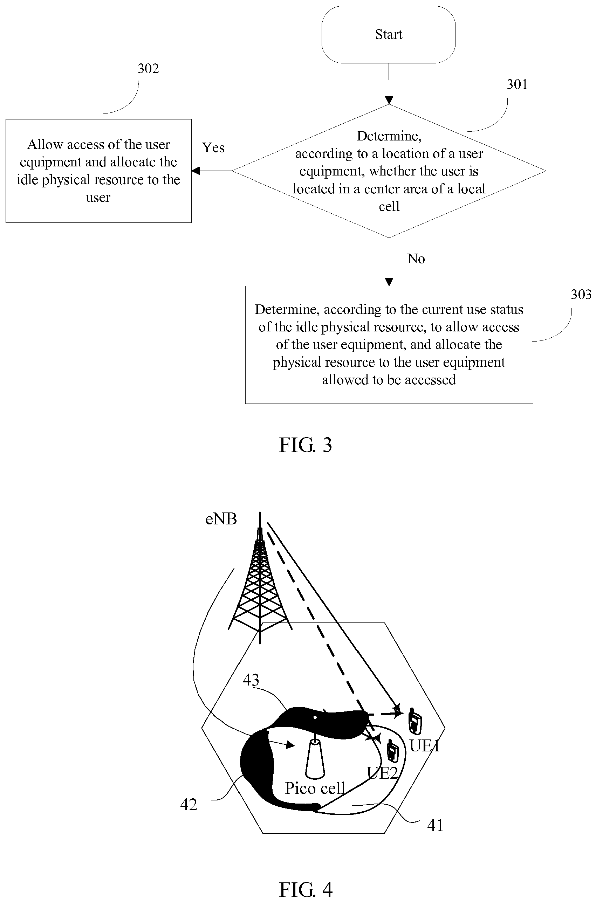

FIG. 3 is a flowchart of controlling access of a user equipment based on the location of the user equipment according to an embodiment of the present invention. The method includes the following steps:

Step 301: Determine, according to a location of a user equipment, whether the user equipment is located in a central area of a local cell; and if so, perform step 302; otherwise, perform step 303.

In the embodiment of the present invention, edge areas of a service area of a low-power node may be determined according to signal strength and interference by using an ICIC technology based on area division. For example, edge areas of a service area of a low-power node are divided into multiple areas. It is assumed that edge areas are divided into three areas: areas 41, 42, and 43 shown in FIG. 4. In actual network deployment, a signal strength test may be performed to further divide the overlapped edge area according to the characteristic of signal strength distribution.

The current location and area number of the user equipment may be determined by using a locating technology. If the user equipment is currently not located in the above mentioned edge area, it may be determined that the user equipment is located in a central area of the local cell. Additionally, the eNB may also determine, according to a signal-to-noise ratio measured by the user equipment, whether the user equipment is located in the central area of the local cell. For example, if the value of the signal-to-noise ratio reported by the user equipment is greater than a set value, the eNB determines that the user equipment is located in the central area of the local cell.

Step 302: Allow access of the user equipment and allocate the idle physical resource to the user equipment.

It should be noted that if there are multiple idle physical resources in the local cell, any idle physical resource may be selected and allocated to the user equipment. This is because the user equipment using any idle physical resource does not cause strong interference to the neighboring cell if the user equipment is located in the central area of the local cell.

Step 303: Determine, according to the current use status of the idle physical resource, to allow access of the user equipment, and allocate the physical resource to the user equipment allowed toaccessed.

If the user equipment is located in the edge area of the local cell, not the central area of the local cell, and the physical resource allocated to the user and a physical resource used by a nearby user equipment in the neighboring cell are in the same frequency band, access of the user equipment may cause strong interference to the neighboring cell.

Therefore, with respect to the user equipment at the edge of the local cell in the foregoing case, the embodiment of the present invention further controls access of the user equipment according to the current use status of the idle physical resource in the cell, so as to avoid causing strong interference to the neighboring cell.

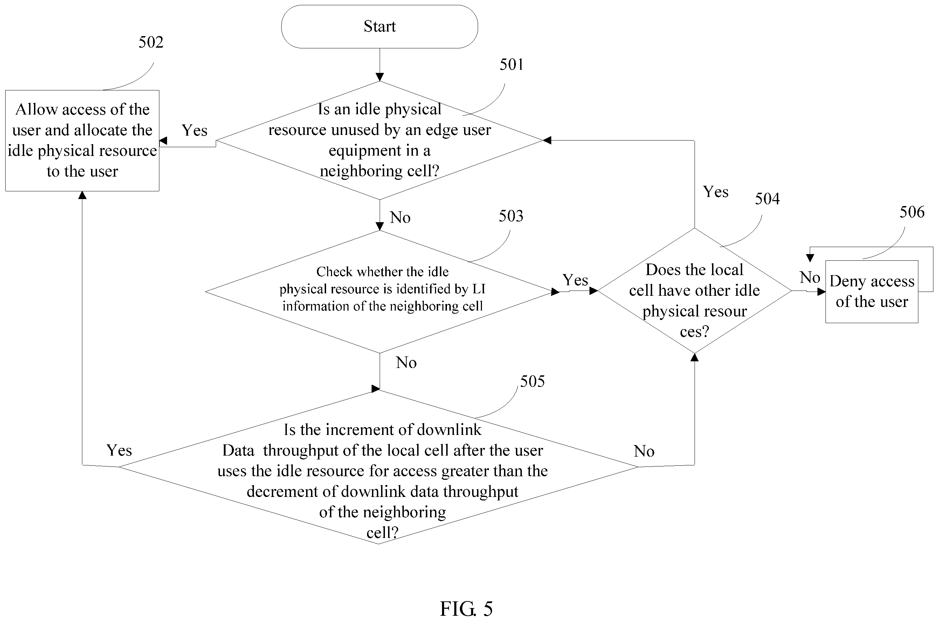

FIG. 5 is a flowchart of controlling access of a user equipment based on the current use status of an idle physical resource according to an embodiment of the present invention. The method includes the following steps:

Step 501: Determine whether an idle physical resource is unused by an edge user equipment in a neighboring cell; and if so, perform step 502; otherwise, perform step 503.

In a specific application, each eNB and each low-power node transmit information of an edge user equipment in a local cell to a central controller. The information may include an edge user identifier and a used physical resource, and may further include allocated power, QoS (Quality of Service, quality of service), and the like. In this way, a node serving the user equipment may obtain, from the central controller, the information of an edge user equipment in a neighboring cell adjacent to the local cell, and determine, according to the information, whether the idle physical resource is unused by the edge user equipment in the neighboring cell.

Step 502: Allow access of the user equipment and allocate the idle physical resource to the user equipment.

That is, the idle physical resource is not used by the edge user equipment in the neighboring cell. In this case, no interference is caused to the neighboring cell when the user equipment uses the idle physical resource.

Step 503: Check whether the idle physical resource is identified by LI (Load Indicator, load indicator) information of the neighboring cell; and if so, perform step 504; otherwise, perform step 505.

If the load of certain resource blocks in the current cell exceeds a specified threshold, an LI message may be sent to the cell. Therefore, in the embodiment of the present invention, if the idle physical resource in the local cell is used by the edge user equipment in the neighboring cell, whether the idle physical resource is identified by LI information of the neighboring cell may be further checked. If the idle physical resource is identified by LI information of the neighboring cell, it indicates that the idle physical resource is overloaded in the neighboring cell and is not suitable for use in this cell; otherwise, interference may be caused to the neighboring cell.

Step 504: Check whether the local cell has another idle physical resource; and if so, return to step 501; otherwise, perform step 506.

Step 505: Determine whether the increment of downlink data throughput of the local cell after the user equipment uses the idle resource for access is greater than the decrement of downlink data throughput of the neighboring cell; and if so, perform step 502; otherwise, perform step 504.

Step 506: Deny access of the user equipment.

In the embodiment of the present invention, if the idle physical resource is used by the edge user equipment in the neighboring cell but is not identified by LI information of the neighboring cell, in order to further determine whether to allocate the idle physical resource to a an accessing user equipment, it is necessary to further determine whether the increment of downlink data throughput of the local cell after the to-be-accessed user equipment uses the idle physical resource for access is greater than the decrement of downlink data throughput of the neighboring cell. Of course, if the increment is greater than the decrement, the idle physical resource may be allocated to the user equipment; otherwise, after the user equipment uses the idle physical resource for access, strong interference may be caused to the neighboring cell, and consequently, inter-cell interference cancellation operations are triggered more frequently, and the service throughput of the edge user equipment is affected. Therefore, in this case, to ensure that the overall system performance is not affected, another idle physical resource may be selected.

There may be multiple implementations of determining whether the increment of the downlink data throughput of the local cell after the user equipment uses the idle resource for access is greater than the decrement of the downlink data throughput of the neighboring cell, which are not limited in embodiments of the present invention. An example is used for description.

Assuming that UE1 and UE2 are two user equipments in neighboring cells, the ratio of energy per bit to energy of received interference signal is as follows:

$$\gamma_1 = \frac{E_{b1}}{I_1} = \frac{P_1 \cdot g_1}{R_1 \cdot (N_1 + p_2 \cdot g_2^*)} \quad (1)$$

$$\gamma_2 = \frac{E_{b2}}{I_2} = \frac{P_2 \cdot g_2}{R_2 \cdot (N_2 + p_1 \cdot g_1^*)} \quad (2)$$

The meaning of each parameter is as follows:

$g_1$:     attenuation from node 1 accessed by UE1 to UE1;

$g_2$:     attenuation from node 2 accessed by UE1 to UE2;

$P_1$:     transmit power of node 1 to UE1;

$P_2$:     transmit power of node 2 to UE2;

$R_1$:     service rate of a current service of UE1;

$R_2$ :        service rate of a current service of UE2;

$E_{b1}$ :        current energy per bit of UE1;

$E_{b2}$ :        current energy per bit of UE2;

$I_1$ :        interference received by UE1 from node 2; and

$I_2$ :        interference received by UE2 from node 1.

The information rates of UE1 and UE2 before access of UE1 are as follows:

$$R_1 = 0 \qquad (3)$$

$$R_2 = \frac{P_2 \cdot g_2 / \gamma_2}{N_2} \qquad (4)$$

The information rates of UE1 and UE2 after access of UE1 are as follows:

$$R_1^* = \frac{P_1 \cdot g_1 / \gamma_1}{N_1 + P_2 \cdot g_2^*} \qquad (5)$$

$$R_2^* = \frac{P_2 \cdot g_2 / \gamma_2}{N_2 + P_1 \cdot g_1^*} \qquad (6)$$

The meaning of each parameter is as follows:

$g_1^*$ :        signal attenuation from node 2 to UE1;

$g_2^*$ :        signal attenuation from node 1 to UE2;

$R_1^*$ :        service rate of a current service of UE1 after access of UE1;

$R_2^*$ :        service rate of a current service of UE2 after access of UE1;

$N_1$ :    all interference received by UE1 except $I_2$; and

$N_2$ :    all interference received by UE2 except $I_1$

To achieve higher system performance after access of UE1, the following condition needs to be met:

$$\Delta R = (R_1^* + R_2^*) - (R_1 + R_2) > 0 \qquad (7)$$

According to formulas (1) to (7), the following formula can be obtained:

$$\Delta R = \frac{(g_1 \cdot g_1^* / \gamma_1) \cdot P_1^2 + (I_2 \cdot g_1 / \gamma_1) \cdot P_1 + (I_1 + P_2 \cdot g_2^*) \cdot I_2 \cdot R_2}{(I_1 \cdot g_1^* + P_2 \cdot g_1^* \cdot g_2^*) \cdot P_1 + (I_1 + P_2 \cdot g_2^*) \cdot I_2} - R_2 \qquad (8)$$

The following may be derived from formulas (7) and (8):

$$P_1 \cdot (P_1 - P_\alpha) > 0 \quad (9)$$

where, $P_\alpha$ is as follows:

$$P_\alpha = \frac{\gamma_1 \cdot R_2 \cdot (I_1 + P_2 \cdot g_2^*)}{g_1} - \frac{I_2}{g_1^*} \quad (10)$$

Apparently, in this case, as long as $P_\alpha < P_1$ is met, the increment of the downlink data throughput of the local cell resulting from access of UE1 is greater than the decrement of the downlink data throughput of the neighboring cell, that is, the system performance may be improved.

Of course, the embodiment of the present invention is not limited to the foregoing method, and other methods may be used to determine whether using a specific idle physical resource by the user equipment may improve the system performance. The specific idle physical resource is an idle resource in the local cell and is used by an edge user equipment in the neighboring cell. That is to say, the idle resource and a physical resource which is used by an edge user in the neighboring cell are in the same frequency band.

Apparently, during access of the user equipment, the cell access method according to the embodiment of the present invention comprehensively considers the idle physical resource of the local cell and the location of the user equipment in the local cell to determine to allow access of the user equipment. This avoids inter-cell interference caused by blind access of the user equipment at the edge of the cell, avoids frequent triggering of ICIC, and improves system performance, and in particular, improves the average throughput of the user equipment at the edge of the cell.

An embodiment of the present invention further provides a cell access method. The method includes the following steps:

receiving an access request sent by a user equipment, determining existence of an idle physical resource, and determining a location of the user equipment; and
determining, according to the location of the user equipment and a use status of the idle physical resource, to deny access of the user equipment.

Determining, according to the location of the user equipment and a use status of the idle physical resource, to deny access of the user equipment includes the following cases:

determining that the idle physical resource is used by an edge user equipment in a neighboring cell, where the idle physical resource is identified by load indicator information of the neighboring cell, determining, according to the location of the user equipment, that the user equipment is not located in a central area of a local cell and that the local cell does not have other idle physical resources, and denying access of the user equipment; and/or
determining that the idle physical resource is used by an edge user equipment in a neighboring cell, where the idle physical resource is not identified by load indicator information of the neighboring cell, and if the increment of downlink data throughput of a local cell after the user equipment uses the idle resource for access is smaller than or equal to the decrement of downlink data throughput of the neighboring cell, and the local cell does not have other idle physical resources, denying access of the user equipment.

Apparently, during access of the user equipment, the cell access method according to the embodiment of the present invention comprehensively considers the idle physical resource of the local cell and the location of the user equipment in the local cell to determine to deny access of the user equipment. This avoids inter-cell interference caused by blind access of the user equipment at the edge of the cell, avoids frequent triggering of ICIC, and improves system performance, and in particular, improves the average throughput of the user equipment at the edge of the cell.

Persons of ordinary skill in the art may understand that all or a part of the steps in the preceding embodiments may be completed by hardware following instructions of a program. The program may be stored in a computer readable storage medium such as a ROM, a RAM, a magnetic disk, or a CD-ROM.

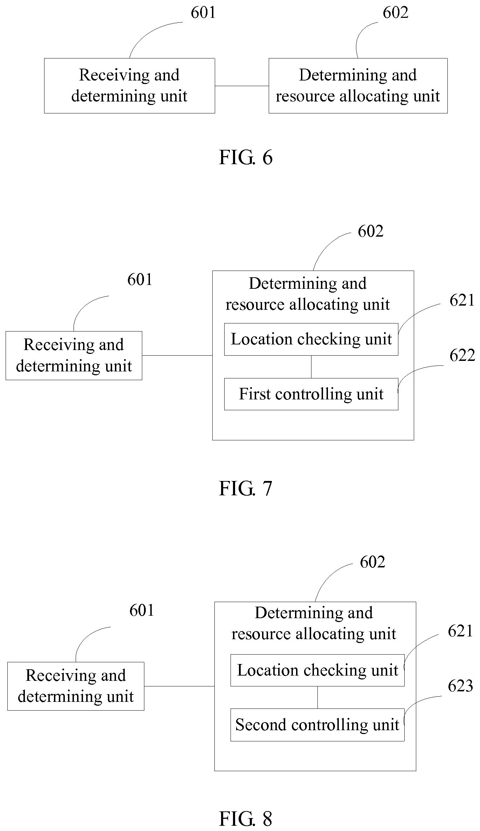

Accordingly, an embodiment of the present invention provides a cell access node device. FIG. 6 is a schematic structural diagram of the node device.

In this embodiment, the node device includes:

a receiving and determining unit 601, configured to receive an access request sent by a user equipment, and determine a location of the user equipment and existence of an idle physical resource; and

a determining and resource allocating unit 602, configured to determine, according to the location of the user equipment determined by the receiving and determining unit 601, to allow access of the user equipment, and allocate the idle physical resource to the user equipment.

As shown in FIG. 7, in the cell access node device according to a specific embodiment of the present invention, the determining and resource allocating unit 602 includes a location checking unit 621 and a first controlling unit 622.

The location checking unit 621 is configured to determine, according to the location of the user equipment determined by the receiving and determining unit 601, that the user equipment is located in a central area of a local cell.

The first controlling unit 622 is configured to allow, according to that the location checking unit 622 determines that the user equipment is located in the central area of the local cell, access of the user equipment, and allocate the idle physical resource to the user equipment.

As shown in FIG. 8, in the cell access node device according to another specific embodiment of the present invention, the first determining and resource allocating unit 602 includes a location checking unit 621 and a second controlling unit 623.

The location checking unit 621 is configured to determine, according to the location of the user equipment determined by the receiving and determining unit 601, that the user equipment is not located in the central area of the local cell.

The second controlling unit 623 is configured to determine, according to that the location checking unit 601 determines that the user equipment is located in the central area of the local cell and the current use status of the idle physical resource, to allow access of the user equipment, and allocate the physical resource to the user equipment.

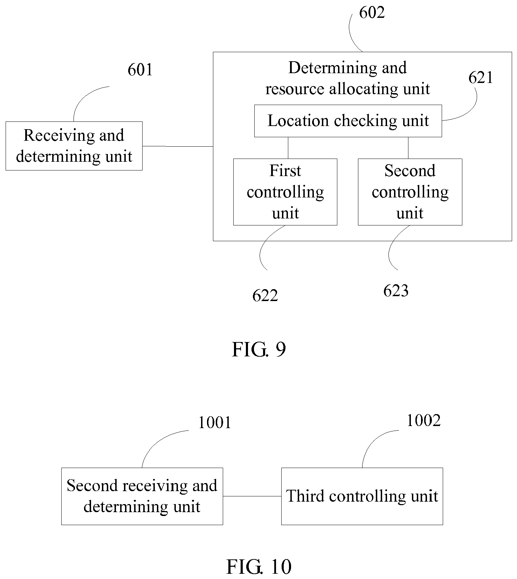

As shown in FIG. 9, in the cell access node device according to another specific embodiment of the present invention, the first determining and resource allocating unit 602 includes a location checking unit 621, a first controlling unit 622, and a second controlling unit 623. The location checking unit 621 determines, according to the location of the user equipment determined by the receiving and determining unit 601, the location of the user equipment. After the location checking unit 622 determines that the user equipment is located in the central area of the local cell, the first controlling unit 622 allows access of the user equipment, and allocates the idle physical resource to the user equipment. After the location checking unit 622 determines that the user equipment is not located in the central area of the local cell, the second controlling unit 623 determines that the user equipment is not located in the central area of the local cell.

It should be noted that in this embodiment of the present invention, the location checking unit 621 may use multiple methods to determine whether the user equipment is located in the central area of the local cell.

For example, edge areas of a service area of a low-power node may be determined according to signal strength and interference by using an ICIC technology based on area division. For example, edge areas of the service area of the low-power node may be divided into multiple areas. In actual network deployment, a signal strength test may be performed to further divide the overlapped edge area according to the characteristic of signal strength distribution, so as to determine the edge area.

Accordingly, in a specific implementation of the location checking unit 621, the locating checking unit includes:

a locating subunit, configured to locate the current location of the user equipment; and

a checking subunit, configured to determine, according to the current location of the user equipment determined by the locating subunit, that the user equipment is not located in the edge area of a service area of a low-power node, and determine that the user equipment is located in the central area of the local cell.

For example, whether the user equipment is located in the central area of the local cell may also be determined based on a signal-to-noise ratio reported by the user equipment. Specially, in another specific implementation of the location checking unit 621, the location checking unit determines that the signal-to-noise ratio reported by the user equipment is greater than a set value, and determines that the user equipment is located in the central area of the local cell.

In the embodiment of the present invention, the second controlling unit includes a status checking unit and an identifier checking unit.

The status checking unit is configured to determine that the idle physical resource is not used by an edge user equipment in a neighboring cell, allow access of the user equipment, and allocate the idle physical resource to the user equipment; or is configured to determine that the idle physical resource is used by an edge user equipment in a neighboring cell.

The identifier checking unit is configured to check, according to that the status checking unit determines that the idle physical resource is used by the edge user equipment in the neighboring cell, that the idle physical resource is identified by load indicator information of the neighboring cell, determine that the increment of downlink data throughput of the local cell after the user equipment uses the idle resource for access is greater than the decrement of downlink data throughput of the neighboring cell, allow access of the user equipment, and allocate the idle physical resource to the user equipment.

According to the embodiment of the present invention, during access of the user equipment, the cell access node device comprehensively considers the idle physical resource of the local cell and the location of the user equipment in the local cell to determine to allow access of the user equipment. This avoids inter-cell interference caused by blind access of the user equipment at the edge of the cell, avoids frequent triggering of ICIC, and improves system performance, and in particular, improves the average throughput of the user equipment at the edge of the cell.

For the detailed process for cell access by using the cell access node device, reference may be made to the description of the cell access method according to the embodiments of the present invention, and details are not given herein.

For other functions and structures of the cell access node device, reference may be made to the above method embodiments.

Accordingly, an embodiment of the present invention provides a cell access node device. As shown in FIG. 10, the device includes:

a second receiving and determining unit 1001, configured to receive an access request sent by a user equipment, determine existence of an idle physical resource, and determine a location of the user equipment; and

a third controlling unit 1002, configured to determine a use status of the idle physical resource, and deny, according to the location of the user equipment determined by the second receiving and determining unit and the use status of the idle physical resource, access of the user equipment.

In this embodiment, the third controlling unit 1002 includes a first access denying unit and/or a second access denying unit.

The first access denying unit is configured to determine that the idle physical resource is used by an edge user equipment in a neighboring cell, where the idle physical resource is identified by load indicator information of the neighboring cell, determine, according to the location of the user equipment, that the user equipment is not located in a central area of a local cell and that the local cell does not have other idle physical resources, and deny access of the user equipment.

The second access denying unit is configured to determine that the idle physical resource is used by the edge user equipment in the neighboring cell, where the idle physical resource is not identified by load indicator information of the neighboring cell, and, if the increment of downlink data throughput of the local cell after the user equipment uses the idle resource for access is smaller than or equal to the decrement of downlink data throughput of the neighboring cell, and the local cell does not have other idle physical resources, deny access of the user equipment.

Apparently, during access of the user equipment, the cell access node device according to the embodiment of the present invention comprehensively considers the idle physical resource of the local cell and the location of the user equipment in the local cell to determine to deny access of the user equipment. This avoids inter-cell interference caused by blind access of the user equipment at the edge of the cell, avoids frequent triggering of ICIC, and improves system performance, and in particular, improves the average throughput of the user equipment at the edge of the cell.

For other functions and structures of the cell access node device, reference may be made to the above method embodiments.

It should be noted that the embodiments in the specification are described in a progressive manner. The same or similar parts in the embodiments make reference to each other. One embodiment illustrates in emphasis what is different from another embodiment. In particular, the node device embodiments are basically similar to the method embodiments, and therefore are described briefly. For details about related content, reference may be made to the description of the method embodiments. The described node device embodiments are merely exemplary, where the units described as separate parts may or may not be physically separate, and parts displayed as units may or may not be physical units, may be located in one position, or may be distributed on a plurality of network elements. A part of or all of the modules may be selected according to the actual needs to achieve the objectives of the solutions of the embodiments. Persons of ordinary skill in the art may understand and implement the embodiments without creative efforts.

## Claims

1. A cell access method, comprising:

receiving by a cell access node device an access request sent by a user equipment, and determining a location of the user equipment and existence of an idle physical resource (201); and

determining by the cell access node device, according to the location of the user equipment, to allow access of the user equipment, and allocating the idle physical resource to the user equipment (202), wherein the determining, according to the location of the user equipment, to allow access of the user equipment, and allocating the idle physical resource to the user equipment comprise:

determining, according to the location of the user equipment, that the user equipment is located in a central area of a local cell (301), allowing access of the user equipment, and allocating the idle physical resource to the user equipment (302); or
determining, according to the location of the user equipment, that the user equipment is not located in a central area of a local cell (301), determining, according to a current use status of the idle physical resource, to allow access of the user equipment, and allocating the idle physical resource to the user equipment (303), wherein the determining, according to the current use status of the idle physical resource, to allow access of the user equipment, and allocating the idle physical resource to the user equipment comprise:

determining that the idle physical resource is not used by an edge user equipment in a neighboring cell (501), allowing access of the user equipment, and allocating the idle physical resource to the user equipment (502); or
determining that the idle physical resource is used by an edge user equipment in a neighboring cell (501), wherein the idle physical resource is not identified by load indicator information of the neighboring cell (503), determining that an increment of downlink data throughput of the local cell after the user equipment uses the idle physical resource for access is greater than a decrement of downlink data throughput of the neighboring cell (505), allowing access of the user equipment, and allocating the idle physical resource to the user equipment (502).

2. The method according to claim 1, wherein the determining, according to the location of the user equipment, that the user equipment is located in the central area of the local cell comprises:

determining an edge area of a service area of a low-power node, and determining the location of the user equipment; and
if the user equipment is currently not located at an edge of the service area of the low-power node, determining that the user equipment is located in the central area of the local cell.

3. The method according to claim 1, wherein the determining, according to the location of the user equipment, that the user equipment is located in the central area of the local cell comprises:

if a signal-to-noise ratio reported by the user equipment is greater than a set value, determining that the user equipment is located in the central area of the local cell.

4. The method according to claim 1, wherein the determining that the increment of downlink data throughput of the local cell after the user equipment uses the idle resource for access is greater than the decrement of downlink data throughput of the neighboring cell comprises:

if, after the user equipment uses the idle resource for access, transmit power $P_1$ of a serving node of the user equipment to the user equipment meets the following condition, determining that the increment of downlink data throughput of the local cell after the user equipment uses the idle resource for access is greater than the decrement of downlink data throughput of the neighboring cell:

$$P_1 > \frac{\gamma_1 \cdot R_2 \cdot (I_1 + P_2 \cdot g_2^*)}{g_1} - \frac{I_2}{g_1^*} ;$$

wherein:

$g_1$ is used to indicate attenuation from an access node of the local cell to the user equipment;

$g_1^*$ is used to indicate attenuation from the edge user equipment in the neighboring cell to the access node of the local cell;

$g_2^*$ is used to indicate attenuation from the user equipment to an access node of the neighboring cell;

$\gamma_1$ is used to indicate a ratio of service energy per bit to energy of received interference signal;

$R_2$ is used to indicate a service rate of a current service of the edge user equipment in the neighboring cell;

$I_1$ is used to indicate interference received by the user equipment from the neighboring cell;

$I_2$ is used to indicate interference received by the edge user equipment in the neighboring cell from the local cell; and

$P_2$ is used to indicate transmit power of an edge node of the neighboring cell to a user equipment accessing the neighboring cell.

5. A cell access node device, comprising:

a receiving and determining unit (601), configured to receive an access request sent by a user equipment, and determine a location of the user equipment and existence of an idle physical resource; and

a determining and resource allocating unit (602), configured to determine, according to the location of the user equipment determined by the receiving and determining unit, to allow access of the user equipment, and allocate the idle physical resource to the user equipment, wherein the determining and resource allocating unit (602) comprises a location checking unit (621), and further comprises a first controlling unit (622) and a second controlling unit (623), wherein:

the location checking unit (621) is configured to determine, according to the location of the user equipment determined by the receiving and determining unit (601), that the user equipment is located in a central area of a local cell; and

the first controlling unit (622) is configured to allow, according to that the location checking unit (621) determines that the user equipment is located in the central area of the local cell, access of the user equipment, and allocate the idle physical resource to the user equipment;

the location checking unit (621) is configured to determine, according to the location of the user equipment determined by the receiving and determining unit (601), that the user equipment is not located in the central area of the local cell; and

the second controlling unit (623) is configured to determine, according to that the location checking unit (621) determines that the user equipment is not located in the central area of the local cell, and a current use status of the idle physical resource, to allow access of the user equipment, and allocate the idle physical resource to the user equipment, wherein the second controlling unit (623) comprises:

a status checking unit, configured to determine that the idle physical resource is not used by an edge user equipment in a neighboring cell, allow access of the user equipment, and allocate the idle physical resource to the user equipment; or

the status checking unit, configured to determine that the idle physical resource is used by an edge user equipment in a neighboring cell; and

an identifier checking unit, configured to check, according to that the status checking unit determines that the idle physical resource is used by the edge user equipment in the neighboring cell, that the idle physical resource is not identified by load indicator information of the neighboring cell, determine that an increment of downlink data throughput of the local cell after the user equipment uses the idle physical resource for access is greater than a decrement of downlink data throughput of the neighboring cell, allow access of the user equipment, and allocate the idle physical resource to the user equipment.

6. The device according to claim 5, wherein the location checking unit (621) comprises:

a locating subunit, configured to locate the location of the user equipment; and

a checking subunit, configured to determine, according to the current location of the user equipment determined by the locating subunit, that the user equipment is not located in an edge area of a service area of a low-power node, and determine that the user equipment is located in the central area of the local cell.

7. The device according to claim 5, wherein:

the location checking unit (621) is specifically configured to determine that a signal-to-noise ratio reported by the user equipment is greater than a set value, and determine that the user equipment is located in the central area of the local cell.

**Patentansprüche**

1.  Zellenzugangsverfahren, das umfasst:

    Empfangen einer Zugangsanforderung, die von einem Benutzergerät gesendet wird, durch eine Zellenzugangsknotenvorrichtung und Bestimmen einer Lage des Benutzergeräts und eines Vorhandenseins einer inaktiven physischen Ressource (201); und
    Bestimmen durch die Zellenzugangsknotenvorrichtung, gemäß der Lage des Benutzergeräts, dass Zugang des Benutzergeräts gewährt wird, und Zuweisen der inaktiven physischen Ressource an das Benutzergerät (202), wobei das Bestimmen, gemäß der Lage des Benutzergeräts, dass Zugang des Benutzergeräts gewährt wird, und Zuweisen der inaktiven physischen Ressource an das Benutzergerät umfassen:

    Bestimmen, gemäß der Lage des Benutzergeräts, dass sich das Benutzergerät in einem zentralen Bereich einer lokalen Zelle befindet (301), Gewähren von Zugang des Benutzergeräts und Zuweisen der inaktiven physischen Ressource an das Benutzergerät (302); oder
    Bestimmen, gemäß der Lage des Benutzergeräts, dass sich das Benutzergerät nicht in einem zentralen Bereich einer lokalen Zelle befindet (301), Bestimmen, gemäß einem aktuellen Verwendungszustand der inaktiven physischen Ressource, dass Zugang des Benutzergeräts gewährt wird, und Zuweisen der inaktiven physischen Ressource an das Benutzergerät (303), wobei
    das Bestimmen, gemäß dem aktuellen Verwendungszustand der inaktiven physischen Ressource, dass Zugang des Benutzergeräts gewährt wird, und Zuweisen der inaktiven physischen Ressource an das Benutzergerät umfassen:

    Bestimmen, dass die inaktive physische Ressource nicht von einem Randbenutzergerät in einer benachbarten Zelle verwendet wird (501), Gewähren von Zugang des Benutzergeräts und Zuweisen der inaktiven physischen Ressource an das Benutzergerät (502); oder
    Bestimmen, dass die inaktive physische Ressource von einem Randbenutzergerät in einer benachbarten Zelle verwendet wird (501), wobei die inaktive physische Ressource von Auslastungsanzeigeinformationen der benachbarten Zelle nicht identifiziert ist (503), Bestimmen, dass eine Zunahme eines Abwärtsstreckendatendurchsatzes der lokalen Zelle, nachdem das Benutzergerät die inaktive physische Ressource zum Zugang verwendet, größer ist als eine Abnahme eines Abwärtsstreckendatendurchsatzes der benachbarten Zelle (505), Gewähren von Zugang des Benutzergeräts und Zuweisen der inaktiven physischen Ressource an das Benutzergerät (502).

2.  Verfahren nach Anspruch 1, wobei das Bestimmen, gemäß der Lage des Benutzergeräts, dass sich das Benutzergerät in dem zentralen Bereich der lokalen Zelle befindet, umfasst:

    Bestimmen eines Randbereichs eines Arbeitsbereichs eines Knotens niedriger Leistung und Bestimmen der Lage des Benutzergeräts; und
    Bestimmen, dass sich das Benutzergerät in dem zentralen Bereich der lokalen Zelle befindet, falls sich das Benutzergerät momentan nicht an einem Rand des Arbeitsbereichs des Knotens niedriger Leistung befindet.

3.  Verfahren nach Anspruch 1, wobei das Bestimmen, gemäß der Lage des Benutzergeräts, dass sich das Benutzergerät in dem zentralen Bereich der lokalen Zelle befindet, umfasst:

    Bestimmen, dass sich das Benutzergerät in dem zentralen Bereich der lokalen Zelle befindet, falls ein Störabstand, das von dem Benutzergerät gemeldet wird, größer als ein festgelegter Wert ist.

4.  Verfahren nach Anspruch 1, wobei das Bestimmen, dass die Zunahme eines Abwärtsstreckendatendurchsatzes der lokalen Zelle, nachdem das Benutzergerät die inaktive Ressource zum Zugang verwendet, größer ist als die Abnahme eines Abwärtsstreckendatendurchsatzes der benachbarten Zelle, umfasst:

    Bestimmen, dass die Zunahme eines Abwärtsstreckendatendurchsatzes der lokalen Zelle, nachdem das Benutzergerät die inaktive Ressource zum Zugang verwendet, größer ist als die Abnahme eines Abwärtsstreckendatendurchsatzes der benachbarten Zelle, falls, nachdem das Benutzergerät die inaktive Ressource zum Zugang verwendet, eine Übertragungsleistung $P_1$ eines Dienstknotens des Benutzergeräts zu dem Benutzergerät die folgende Bedingung erfüllt:

$$P_1 > \frac{\gamma_1 \cdot R_2 \cdot (I_1 + P_2 \cdot g_2^*)}{g_1} - \frac{I_2}{g_1^*};$$

wobei:

$g_1$ zum Anzeigen einer Abschwächung von einem Zugangsknoten der lokalen Zelle zu dem Benutzergerät verwendet wird;

$g_1^*$ zum Anzeigen einer Abschwächung von dem Randbenutzergerät in der benachbarten Zelle zu dem Zugangsknoten der lokalen Zelle verwendet wird;

$g_2^*$ zum Anzeigen einer Abschwächung von dem Benutzergerät zu einem Zugangsknoten der benachbarten Zelle verwendet wird;

$\gamma_1$ zum Anzeigen eines Verhältnisses von Dienstenergie pro Bit zu Energie eines empfangenen Störsignals verwendet wird;

$R_2$ zum Anzeigen einer Dienstrate eines aktuellen Dienstes des Randbenutzergeräts in der benachbarten Zelle verwendet wird;

$I_1$ zum Anzeigen einer Störung verwendet wird, die von dem Benutzergerät von der benachbarten Zelle empfangen wird;

$I_2$ zum Anzeigen einer Störung verwendet wird, die von dem Randbenutzergerät in der benachbarten Zelle von der lokalen Zelle empfangen wird; und

$P_2$ zum Anzeigen einer Übertragungsleistung eines Randknotens der benachbarten Zelle zu einem auf die benachbarte Zelle zugreifendem Benutzergerät verwendet wird.

5.  Zellenzugangsknotenvorrichtung, die umfasst:

eine Empfangs- und Bestimmungseinheit (601), die konfiguriert ist, eine von einem Benutzergerät gesendete Zugangsanforderung zu empfangen und eine Lage des Benutzergeräts und ein Vorhandensein einer inaktiven physischen Ressource zu bestimmen; und
eine Bestimmungs- und Ressourcenzuweisungseinheit (602), die konfiguriert ist, gemäß der Lage des Benutzergeräts, die durch die Empfangs- und Bestimmungseinheit bestimmt wurde, zu bestimmen, dass Zugang des Benutzergeräts gewährt wird, und die inaktive physische Ressource an das Benutzergerät zuzuweisen, wobei die Bestimmungs- und Ressourcenzuweisungseinheit (602) eine Lageüberprüfungseinheit (621) umfasst und ferner eine erste Steuereinheit (622) und eine zweite Steuereinheit (623) umfasst, wobei:

die Lageüberprüfungseinheit (621) konfiguriert ist, gemäß der Lage des Benutzergeräts, die von der Empfangs- und Bestimmungseinheit (601) bestimmt wurde, zu bestimmen, dass sich das Benutzergerät in einem zentralen Bereich einer lokalen Zelle befindet; und
die erste Steuereinheit (622) konfiguriert ist, gemäß der Bestimmung durch die Lageüberprüfungseinheit (621), dass sich das Benutzergerät in dem zentralen Bereich der lokalen Zelle befindet, Zugang des Benutzergeräts zu gewähren und die inaktive physische Ressource dem Benutzergerät zuzuweisen;
die Lageüberprüfungseinheit (621) konfiguriert ist, gemäß der Lage des Benutzergeräts, die durch die Empfangs- und Bestimmungseinheit (601) bestimmt wurde, zu bestimmen, dass sich das Benutzergerät nicht in dem zentralen Bereich der lokalen Zelle befindet; und
die zweite Steuereinheit (623) konfiguriert ist, gemäß der Bestimmung durch die Lageüberprüfungseinheit (621), dass sich das Benutzergerät nicht in dem zentralen Bereich der lokalen Zelle befindet, und einem aktuellen Verwendungszustand der inaktiven physischen Ressource, zu bestimmen, dass Zugang des Benutzergeräts gewährt wird, und die inaktive physische Ressource an das Benutzergerät zuzuweisen, wobei die zweite Steuereinheit (623) umfasst:

eine Zustandsüberprüfungseinheit, die konfiguriert ist zu, bestimmen, dass die inaktive physische Ressource nicht von einem Randbenutzergerät in einer benachbarten Zelle verwendet wird, Zugang des Benutzergeräts zu gewähren und die inaktive physische Ressource an das Benutzergerät zuzuweisen; oder
die Zustandsüberprüfungseinheit, die konfiguriert ist, zu bestimmen, dass die inaktive physische Ressource von einem Randbenutzergerät in einer benachbarten Zelle verwendet wird; und

eine Identifizierungsüberprüfungseinheit, die konfiguriert ist, gemäß der Bestimmung durch die Zustandsüberprüfungseinheit, dass die inaktive physische Ressource von dem Randbenutzergerät in der benachbarten Zelle verwendet wird, zu überprüfen, dass die inaktive physische Ressource nicht von Auslastungsanzeigeinformationen der benachbarten Zelle identifiziert ist, zu bestimmen, dass eine Zunahme eines Abwärtsstreckendatendurchsatzes der lokalen Zelle, nachdem das Benutzergerät die inaktive physische Ressource zum Zugang verwendet, größer ist als eine Abnahme eines Abwärtsstreckendatendurchsatzes der benachbarten Zelle, Zugang des Benutzergeräts zu gewähren und die inaktive physische Ressource an das Benutzergerät zuzuweisen.

6. Vorrichtung nach Anspruch 5, wobei die Lageüberprüfungseinheit (621) umfasst:

eine Lokalisierungsuntereinheit, die konfiguriert ist, die Lage des Benutzergeräts zu lokalisieren; und eine Überprüfungsuntereinheit, die konfiguriert ist, gemäß der aktuellen Lage des Benutzergeräts, die von der Lokalisierungsuntereinheit bestimmt wurde, zu bestimmen, dass sich das Benutzergerät nicht in einem Randbereich eines Arbeitsbereichs eines Knotens niedriger Leistung befindet, und zu bestimmen, dass sich das Benutzergerät in dem zentralen Bereich der lokalen Zelle befindet.

7. Vorrichtung nach Anspruch 5, wobei:

die Lageüberprüfungseinheit (621) speziell dazu konfiguriert ist, zu bestimmen, dass ein Störabstand, das von dem Benutzergerät gemeldet wird, größer ist als ein festgelegter Wert, und zu bestimmen, dass sich das Benutzergerät in dem zentralen Bereich der lokalen Zelle befindet.

## Revendications

1. Procédé d'accès à une cellule comprenant :

la réception d'une demande d'accès, par un noeud d'accès à une cellule, envoyée par un équipement utilisateur, et la détermination de l'emplacement de l'équipement utilisateur et de l'existence d'une ressource physique au repos (201), et
la détermination par un noeud d'accès à la cellule et en fonction de l'emplacement de l'équipement utilisateur, de l'autorisation d'accès faite à l'équipement utilisateur, et l'allocation de la ressource physique au repos à l'équipement utilisateur (202), dans lequel la détermination, en fonction de l'emplacement de l'équipement utilisateur, de l'autorisation d'accès faite à l'équipement utilisateur, et l'allocation de la ressource physique au repos à l'équipement utilisateur, comprennent :

la détermination, en fonction de l'emplacement de l'équipement utilisateur, de ce que l'équipement utilisateur est situé dans une zone centrale appartenant à une cellule locale (301), de l'autorisation d'accès faite à l'équipement utilisateur, et l'allocation de la ressource physique au repos à l'équipement utilisateur (302), ou
la détermination, en fonction de l'emplacement de l'équipement utilisateur, de ce que l'équipement utilisateur n'est pas situé dans une zone centrale appartenant à une cellule locale (301) ; la détermination, en fonction de l'état courant d'utilisation de la ressource physique au repos, de l'autorisation d'accès faite à l'équipement utilisateur, et l'allocation de la ressource physique au repos à l'équipement utilisateur (303), dans lequel :

la détermination, en fonction de l'état courant d'utilisation de la ressource physique au repos, de l'autorisation d'accès faite à l'équipement utilisateur et l'allocation de la ressource physique au repos à l'équipement utilisateur comprennent :

la détermination de ce que la ressource physique au repos n'est pas utilisée par un équipement utilisateur en limite dans une cellule voisine (501), autorisant l'accès de l'équipement utilisateur, et l'allocation de la ressource physique au repos à l'équipement utilisateur (502), ou
la détermination de ce que la ressource physique au repos est utilisée par un équipement utilisateur en limite dans une cellule voisine (501), la ressource physique au repos n'étant pas identifiée par des informations d'indicateur de charge de la cellule voisine (503) ; la détermination de ce qu'un incrément de débit de données de liaison descendante de la cellule locale, après que l'équipement utilisateur a utilisé la ressource physique au repos en vue d'un accès, est supérieur à un décrément de débit de données de liaison descendante de la cellule voisine (505), autorisant l'accès de l'équipement utilisateur, et l'allocation de la ressource physique au repos à l'équipement utilisateur (502).

2. Procédé selon la revendication 1, dans lequel la détermination, en fonction de l'emplacement de l'équipement utilisateur, de ce que l'équipement utilisateur est situé dans la zone centrale de la cellule locale, comprend :

la détermination d'une zone en limite d'une zone de service d'un noeud basse puissance, ainsi que la détermination de l'emplacement de l'équipement utilisateur, et
la détermination, si l'équipement utilisateur n'est actuellement pas situé sur une limite de la zone de service du noeud basse puissance, de ce que l'équipement utilisateur est situé dans la zone centrale de la cellule locale.

3. Procédé selon la revendication 1, dans lequel la détermination, en fonction de l'emplacement de l'équipement utilisateur, de ce que l'équipement utilisateur est situé dans la zone centrale de la cellule locale, comprend :

la détermination, si le rapport signal sur bruit indiqué par l'équipement utilisateur est supérieur à une valeur réglée, de ce que l'équipement utilisateur est situé dans la zone centrale de la cellule locale.

4. Procédé selon la revendication 1, dans lequel la détermination, de ce que l'incrément de débit de données de liaison descendante de la cellule locale, après que l'équipement utilisateur a utilisé la ressource au repos en vue d'un accès, est supérieur au décrément de débit de données de liaison descendante de la cellule voisine, comprend :

la détermination de ce que l'incrément de débit de données de liaison descendante de la cellule locale après que l'équipement utilisateur a utilisé la ressource au repos en vue d'un accès, est supérieur au décrément de débit de données de liaison descendante de la cellule voisine si, après que l'équipement utilisateur a utilisé la ressource au repos en vue d'un accès, la puissance d'émission $P_1$ d'un noeud de desserte de l'équipement utilisateur vers l'équipement utilisateur satisfait à la condition suivante :

$$P_1 > \frac{\gamma_1 \cdot R_2 \cdot (I_1 + P_2 \cdot g_2^*)}{g_1} - \frac{I_2}{g_1^*}$$

où

$g_1$ est utilisé pour indiquer l'atténuation depuis un noeud d'accès de la cellule locale à l'équipement utilisateur,
$g_1^*$ est utilisé pour indiquer l'atténuation depuis l'équipement utilisateur en limite dans la cellule voisine au noeud d'accès de la cellule locale,
$g_2^*$ est utilisé pour indiquer l'atténuation depuis l'équipement utilisateur jusqu'à un noeud d'accès de la cellule voisine,
$\gamma_1$ est utilisé pour indiquer le rapport de l'énergie de service par bit sur l'énergie du signal d'interférence reçu,
$R_2$ est utilisé pour indiquer un débit de service du service courant de l'équipement utilisateur en limite dans la cellule voisine,
$I_1$ est utilisé pour indiquer l'interférence reçue par l'équipement utilisateur en provenance de la cellule voisine,
$I_2$ est utilisé pour indiquer l'interférence reçue par l'équipement utilisateur en limite dans la cellule voisine en provenance de la cellule locale, et
$P_2$ est utilisé pour indiquer la puissance d'émission d'un noeud en limite de la cellule voisine vers un équipement utilisateur accédant à la cellule voisine.

5. Noeud d'accès à une cellule, comprenant :

une unité de réception et de détermination (601) configurée pour recevoir une demande d'accès envoyée par un équipement utilisateur, et configurée pour déterminer l'emplacement de l'équipement utilisateur et l'existence d'une ressource physique au repos, et
une unité de détermination et d'allocation de ressource (602) configurée pour déterminer, en fonction de l'emplacement de l'équipement utilisateur déterminé par l'unité de réception et de détermination, d'autoriser l'accès de l'équipement utilisateur, et configurée pour allouer la ressource physique au repos à l'équipement utilisateur, l'unité de détermination et d'allocation de ressource (602) comprenant une unité de contrôle d'emplacement (621) et comprenant en outre une première unité de commande (622) et une seconde unité de commande (623), où :

l'unité de contrôle d'emplacement (621) est configurée pour déterminer, en fonction de l'emplacement de l'équipement utilisateur déterminé par l'unité de réception et de détermination (601), que l'équipement utilisateur est situé dans une zone centrale appartenant à une cellule locale, et

la première unité de commande (622) est configurée pour autoriser l'accès de l'équipement utilisateur, en fonction du fait que l'unité de contrôle d'emplacement (621) a déterminé que l'équipement utilisateur est situé dans la zone centrale de la cellule locale, et configurée pour allouer la ressource physique au repos à l'équipement utilisateur,

l'unité de contrôle d'emplacement (621) est configurée pour déterminer, en fonction de l'emplacement de l'équipement utilisateur déterminé par l'unité de réception et de détermination (601), que l'équipement utilisateur n'est pas situé dans une zone centrale d'une cellule locale, et

la seconde unité de commande (623) est configurée pour déterminer, en fonction du fait que l'unité de contrôle d'emplacement (621) a déterminé que l'équipement utilisateur n'est pas situé dans la zone centrale de la cellule locale, et en fonction de l'état courant d'utilisation de la ressource physique au repos, d'autoriser l'accès de l'équipement utilisateur, et configurée pour allouer la ressource physique au repos à l'équipement utilisateur, la seconde unité de commande (623) comprenant :

une unité de contrôle d'état, configurée pour déterminer que la ressource physique au repos n'est pas utilisée par un équipement utilisateur en limite dans une cellule voisine, configurée pour autoriser l'accès de l'équipement utilisateur, et pour allouer la ressource physique au repos à l'équipement utilisateur, ou

l'unité de contrôle d'état, configurée pour déterminer que la ressource physique au repos est utilisée par un équipement utilisateur en limite dans une cellule voisine, et une unité de contrôle d'identificateur, configurée pour contrôler que la ressource physique au repos n'est pas identifiée par des informations d'indicateur de charge de la cellule voisine, en fonction du fait que l'unité de contrôle d'état a déterminé que la ressource physique au repos est utilisée par l'équipement utilisateur en limite dans la cellule voisine ; configurée pour déterminer qu'un incrément de débit de données de liaison descendante de la cellule locale, après que l'équipement utilisateur a utilisé la ressource physique au repos en vue d'un accès, est supérieur à un décrément de débit de données de liaison descendante de la cellule voisine ; configurée pour autoriser l'accès de l'équipement utilisateur et pour allouer la ressource physique au repos à l'équipement utilisateur.

6. Noeud selon la revendication 5 dans lequel l'unité de contrôle d'emplacement (621) comprend :

une sous unité de localisation configurée pour localiser l'emplacement de l'équipement utilisateur, et
une sous unité de contrôle configurée pour déterminer, en fonction de l'emplacement actuel de l'équipement utilisateur, déterminé par la sous unité de localisation, que l'équipement utilisateur n'est pas situé dans une zone en limite de la zone de service d'un noeud basse puissance, et configurée pour déterminer que l'équipement utilisateur est situé dans la zone centrale de la cellule locale.

7. Noeud selon la revendication 5, dans lequel :

l'unité de contrôle d'emplacement (621) est configurée en particulier pour déterminer que le rapport signal sur bruit indiqué par l'équipement utilisateur est supérieur à une valeur réglée, et pour déterminer que l'équipement utilisateur est situé dans la zone centrale de la cellule locale.

FIG. 1

| Receive an access request sent by a user equipment, and determine a location of the user equipment and existence of an idle physical resource | 201 |
|---|---|

| Determine, according to the location of the user equipment, to allow access of the user equipment, and allocate the idle physical resource to the user equipment | 202 |

FIG. 2

302

Allow access of the user
equipment and allocate the
idle physical resource to the
user

Yes

301

Determine,
according to a location of a user
equipment, whether the user is
located in a center area of a local
cell

No

303

Determine, according to the current use status
of the idle physical resource, to allow access
of the user equipment, and allocate the
physical resource to the user equipment
allowed to be accessed

Start

FIG. 3

eNB

43

42

Pico cell

UE1

UE2

41

FIG. 4

```
                              ┌──────────────┐
                              │    Start     │
                              └──────┬───────┘
                                     │
                                     ▼            501
┌──────────────┐          ╱─────────────────────╲
│ Allow access │         ╱  Is an idle physical   ╲
│ of the       │  Yes   ╱  resource unused by an   ╲ ◄──────────────┐
│ user and     │ ◄──── ╲  edge user equipment in a ╱                │
│ allocate the │        ╲   neighboring cell?     ╱                 │
│ idle physical│         ╲───────────┬───────────╱                  │
│ resource to  │                     │ No      503                  │ Yes    504
│ the user     │                     ▼                              │
└──────┬───────┘          ╱─────────────────────╲         ╱──────────────╲
  502  │                 ╱  Check whether the idle╲  Yes  ╱  Does the local ╲  No   ┌──────────┐
       ▲                ╲  physical resource is    ╱ ───► ╲ cell have other  ╱ ───► │  Deny    │
       │                 ╲ identified by LI info   ╱       ╲ idle physical   ╱      │  access  │
       │                  ╲ of the neighboring cell╱        ╲ resources?    ╱       │ of user  │
       │                   ╲──────────┬───────────╱          ╲──────┬──────╱        └──────────┘
       │                              │ No                          │ No         506
       │                              ▼          505                │
       │  Yes          ╱───────────────────────────────╲           │
       └────────────── ╲ Is the increment of downlink    ╱  No     │
                       ╲ Data throughput of the local     ╱ ───────┘
                        ╲ cell ... greater than the       ╱
                         ╲ decrement ...                 ╱
                          ╲─────────────────────────────╱
```

Allow access of the user and allocate the idle physical resource to the user — 502

Is an idle physical resource unused by an edge user equipment in a neighboring cell? — 501 — Yes / No

Check whether the idle physical resource is identified by LI information of the neighboring cell — 503 — Yes / No

Does the local cell have other idle physical resources? — 504 — Yes / No

Deny access of the user — 506

Is the increment of downlink Data throughput of the local cell after the user uses the idle resource for access greater than the decrement of downlink data throughput of the neighboring cell? — 505 — Yes / No

FIG. 5

601                                                    602

| Receiving and determining unit | | Determining and resource allocating unit |

FIG. 6

602

601

| Receiving and determining unit | | Determining and resource allocating unit |
| | | Location checking unit | 621 |
| | | First controlling unit | 622 |

FIG. 7

602

601

| Receiving and determining unit | | Determining and resource allocating unit |
| | | Location checking unit | 621 |
| | | Second controlling unit | 623 |

FIG. 8

602

601

Determining and
resource allocating unit

621

Location checking unit

Receiving and
determining unit

First
controlling
unit

Second
controlling
unit

622

623

FIG. 9

1001

1002

Second receiving and
determining unit

Third controlling unit

FIG. 10

**EP 2 693 808 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 20020164997 A1
- WO 2008144520 A
- WO 02065789 A2
- WO 02065789 A
- US 20070010270 A1
- EP 1339251 A2